# DEMANDE DE BREVET EUROPEEN

(11) **EP 0 660 009 A1**
(43) Date de publication de la demande: **28.06.1995**
(21) Numéro de dépôt: 94402944.6
(22) Date de dépôt: 20.12.1994
(51) Int. Cl.: F16F 15/16, G01D 11/12

(54) **Appareil indicateur à commande électromagnétique incorporant un moyen d'amortissement de vibrations**

(30) Priorité: 22.12.1993 FR 9315450
(71) Demandeur: MAGNETI MARELLI FRANCE, F-92000 Nanterre (FR)
(72) Inventeur: Guillou, Jean-Pierre, F-92700 Colombes (FR); Lazareff, André, F-92110 Clichy (FR)
(74) Mandataire: Martin, Jean-Jacques

(57) **Abrégé**

La présente invention concerne un appareil indicateur à commande électromagnétique, notamment logomètre, du type comprenant un bâti (10) qui loge un ensemble à bobines (12), un équipage rotatif sensible au champ magnétique généré par l'ensemble à bobine et un moyen d'amortissement de l'équipage mobile formé d'une chambre (30) délimitée pour une part, par un élément (40) lié à l'équipage mobile et pour une autre part, par un élément (50) lié au bâti (10), laquelle chambre (30) contient un fluide visqueux, caractérisé par le fait que l'élément (50) lié au bâti (10) et délimitant la chambre (30) est formée d'une pièce distincte du bâti (10) et conçue pour être fixée sur celui-ci après l'étalonnage, de sorte que l'amortissement de l'appareil ne soit généré qu'après étalonnage.

## Description

La présente invention concerne le domaine des appareils indicateurs à commande électromagnétique, notamment les logomètres.

On sait que les logomètres comprennent généralement :
- deux bobines de commande croisées à 90°,
- un aimant à aimantation radiale monté à rotation dans une chambre interne définie par lesdites bobines,
- un arbre lié à l'aimant et coaxial à celui-ci adapté pour recevoir le moyeu d'une aiguille, et
- un blindage magnétique qui entoure au moins partiellement les bobines.

L'aimant s'oriente selon la résultante des champs magnétiques créés par les deux bobines.

Ainsi si les deux bobines sont alimentées par des signaux représentant les sinus/cosinus, ou la tangente et un vecteur d'unité, d'un angle représentant une grandeur d'entrée, l'orientation angulaire de l'aimant, par rapport à une position de référence, est directement représentative de cette grandeur d'entrée.

Plus précisément, pour amortir le déplacement de l'arbre de sortie, l'aimant est généralement placé dans une coupelle remplie d'un fluide visqueux, par exemple de l'huile silicone.

Les logomètres connus du type précité ont déjà rendu de grands services.

Cependant, ils présentent un inconvénient majeur : le temps d'étalonnage (réglage de la position angulaire de l'aiguille sous commande électrique contrôlée) est très long en raison de la présence du produit amortisseur (huile silicone), surtout si cet étalonnage doit être réalisé successivement pour différents points de contrôle.

La présente invention a pour but de perfectionner les indicateurs à commande électromagnétique connus, notamment les logomètres.

Ce but est atteint dans le cadre de la présente invention grâce à un appareil indicateur à commande électromagnétique du type comprenant un bâti qui loge un ensemble à bobine, un équipage rotatif sensible au champ magnétique généré par l'ensemble à bobine et un moyen d'amortissement de l'équipage mobile, formé d'une chambre délimitée pour une part, par un élément lié à l'équipage mobile et pour une autre part, par un élément lié au bâti, laquelle chambre comprend un fluide visqueux,
caractérisé par le fait que l'élément lié au bâti et délimitant la chambre est formé d'une pièce distincte et conçue pour être fixée sur celui-ci après l'étalonnage de sorte que l'amortissement de l'appareil puisse être généré après étalonnage.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique, partiellement en coupe axiale longitudinale, d'un indicateur à commande électromagnétique conforme à la présente invention, et
- la figure 2 représente une vue partielle d'une variante de réalisation d'un indicateur conforme à la présente invention.

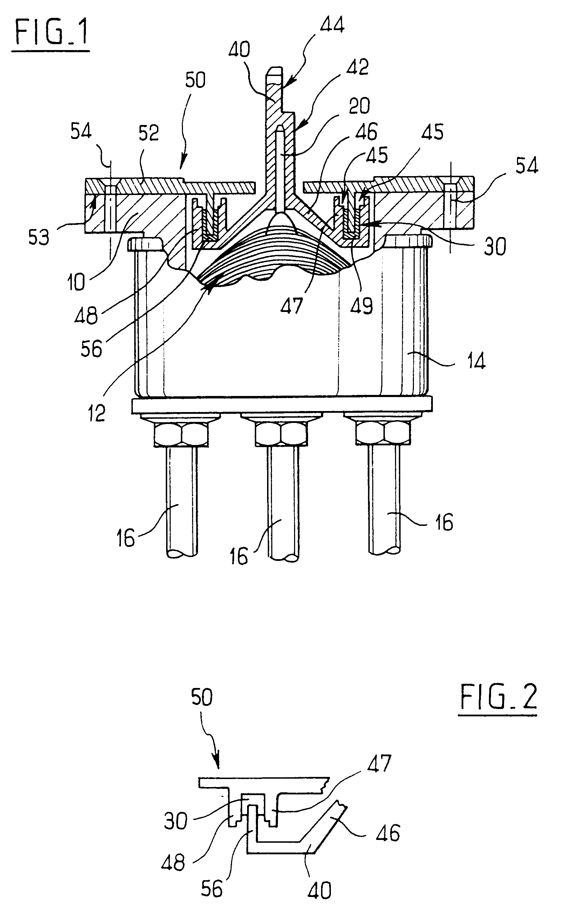

On aperçoit sur la figure 1 annexée, un indicateur à commande électromagnétique de type logométrique comprenant un bâti 10 supportant des bobines 12, par exemple et de préférence deux bobines croisées à 90°. Le bâti 10 et les bobines 12 sont entourés d'un blindage magnétique 14. On aperçoit également sur la figure 1 annexée, les broches 16 en matériau électriquement conducteur, portées par le bâti 10 et le blindage 14, pour assurer l'alimentation électrique des bobines 12.

La structure de ce bâti 10, des bobines 12, du blindage 14 et des broches d'alimentation 16, connue en elle-même, ne sera pas décrite plus en détail par la suite.

Il en est de même pour l'équipage monté à rotation sur cet appareil indicateur. On rappelle simplement que comme indiqué précédemment, cet équipage comprend essentiellement un aimant à aimantation radiale monté à pivotement dans l'espace interne défini par les bobines 12 et un axe 20 solidaire de l'aimant. L'axe 20, qui constitue l'arbre de sortie de l'appareil indicateur, est accessible à l'extérieur des bobines 12.

Cependant, selon l'invention, les moyens d'amortissement de l'équipage mobile ne sont pas prévus à l'intérieur de la chambre délimitée par les bobines 12, mais à l'extérieur de celles-ci.

Plus précisément, la chambre d'amortissement est référencée 30 sur la figure 1 annexée. Cette chambre d'amortissement 30 est définie en partie, par une pièce 40 liée à l'arbre de sortie 20 et pour une autre part, par une pièce 50 liée au bâti 10, mais distincte de celui-ci. La pièce 40 liée à l'arbre 20 comprend un fourreau 42 possédant un canal interne conçu pour être chassé sur l'arbre de sortie 20. Ce fourreau 42 possède avantageusement une forme d'indexation 44 non symétrique de révolution autour de l'axe du fourreau 40, par exemple sous forme d'un méplat pour recevoir le moyeu d'aiguille dans une position univoque.

Le fourreau 42 se prolonge par une collerette 46 généralement radiale, par exemple de contour tronconique. Cette collerette 46 est pourvue au niveau de sa périphérie extérieure de deux couronnes 47, 48 concentriques entre elles et concentriques à l'axe de l'arbre 20. Ces deux couronnes 47, 48 délimitent entre elles une gorge annulaire 49 centrée sur l'axe de l'arbre 20 et qui constitue la chambre d'amortissement. Cette gorge annulaire 49 est ouverte vers l'extérieur du dispositif indicateur, soit à l'opposé des bobines 12.

On peut noter que chacune des couronnes 47, 48 est pourvue sur sa face interne et au voisinage de son bord libre d'un décrochement 45. Ce décrochement 45 a pour but de garantir un maintien par capillarité du fluide visqueux, par exemple du silicone, placé dans la gorge 49.

La pièce 50 liée au bâti 10 est quant à elle formée d'un flasque 52 transversal à l'axe de l'arbre 20 et fixé sur le bâti 10 par tout moyen approprié, par exemple à l'aide de vis esquissées sous la référence 54. Le flasque 52 est muni sur sa face interne 53 d'un muret cylindrique 56 placé dans la gorge annulaire 49. Le rayon de la surface périphérique interne et le rayon de la surface périphérique externe du muret 56 sont adaptés de sorte que ce muret 56 soit avantageusement équidistant des deux couronnes 47 et 48 délimitant la gorge 49.

De façon préférentielle, le jeu existant entre le muret 56 et respectivement les couronnes 47, 48 est de l'ordre de 3/10ème de mm.

L'homme de l'art comprendra aisément que les indicateurs à commande électromagnétique conformes à la présente invention peuvent être étalonnés rapidement avant assemblage de la pièce 50. En effet, avant que la pièce 50 ne soit placée sur le bâti 10, l'indicateur n'est pas amorti. L'étalonnage peut par conséquent être réalisé rapidement en alimentant de façon contrôlée les bobinages 12 et en orientant la structure d'indexation 44 prévue sur la pièce 40 dans la position de consigne définie par cette alimentation contrôlée. Une fois l'étalonnage achevé, la pièce 50 peut être fixée sur le bâti 10 de sorte que l'insertion du muret 56 dans la gorge annulaire 49 préalablement pourvue de silicone ou matériau équivalent permette l'amortissement de l'appareil indicateur, de façon connue en soi.

On notera que de préférence, pour introduire le silicone dans la gorge annulaire 49, on utilise plusieurs aiguilles d'injection équi-réparties autour de l'axe de la gorge 49 et on opère au cours de l'injection du silicone dans la gorge, une rotation relative entre ces aiguilles d'injection et la pièce 40.

Bien entendu la présente invention n'est pas limitée au mode de réalisation particulier qui vient d'être décrit mais s'étend à toute variante conforme à son esprit.

En particulier, comme on l'a représenté sur la figure 2, les structures définissant la chambre d'amortissement 30 précédemment décrites peuvent être inversées sur les pièces 40 et 50, c'est-à-dire que la gorge annulaire 49 peut être prévue sur la pièce 50 distincte du bâti mais conçue pour être fixée sur celui-ci, tandis que le muret cylindrique 56 est solidaire de la périphérie de la collerette 46 formée sur la pièce 40 chassée sur l'arbre de sortie 20 du logomètre.

Selon une autre variante, la pièce 50 distincte du bâti mais conçue pour être fixée sur celui-ci, peut être incluse dans le support cadran de l'appareil indicateur.

## Revendications

1. Appareil indicateur à commande électromagnétique, notamment logomètre, du type comprenant un bâti (10) qui loge un ensemble à bobines (12), un équipage rotatif sensible au champ magnétique généré par l'ensemble à bobine et un moyen d'amortissement de l'équipage mobile formé d'une chambre (30) délimitée pour une part, par un élément (40) lié à l'équipage mobile et pour une autre part, par un élément (50) lié au bâti (10), laquelle chambre (30) contient un fluide visqueux,
caractérisé par le fait que l'élément (50) lié au bâti (10) et délimitant la chambre (30) est formée d'une pièce distincte du bâti (10) et conçue pour être fixée sur celui-ci après l'étalonnage, de sorte que l'amortissement de l'appareil puisse être généré après étalonnage.

2. Appareil selon la revendication 1, caractérisé par le fait que la chambre d'amortissement (30) est définie à l'extérieur des bobines (12).

3. Appareil selon l'une des revendications 1 ou 2, caractérisé par le fait que la chambre d'amortissement est définie par une gorge annulaire (49) formée sur l'un des éléments de la chambre et qui reçoit un muret cylindrique (56) prévu sur l'autre élément (50) de la chambre.

4. Appareil selon la revendication 3, caractérisé par le fait que la gorge annulaire (49) est formée sur un élément (40) adapté pour être chassé sur l'arbre de sortie (20).

5. Appareil selon la revendication 3, caractérisé par le fait que la gorge annulaire (49) est prévue sur l'élément (50) lié au bâti (10).

6. Appareil selon l'une des revendications 1 à 5, caractérisé par le fait que l'élément (40) lié à l'équipage mobile comprend un fourreau conçu pour être chassé sur l'arbre de sortie (20) et une collerette généralement annulaire (46) qui délimite sur sa périphérie extérieure la chambre d'amortissement (30).

7. Appareil selon l'une des revendications 1 à 6, caractérisé par le fait qu'il comprend deux couronnes concentriques (47, 48) délimitant une gorge annulaire (49) apte à recevoir un fluide visqueux, lesquelles couronnes concentriques (47, 48) possèdent sur leur surface interne et au niveau de leurs bords libres, des décrochements (45) permettant de confiner le fluide visqueux par capillarité.

8. Appareil selon l'une des revendications 1 à 7, caractérisé par le fait que le jeu défini entre les parois d'une gorge annulaire (49) de la chambre d'amortissement et un muret cylindrique (56) prévu sur l'autre élément, est de l'ordre de 3/10ème de mm.

9. Appareil selon l'une des revendications 1 à 8, caractérisé par le fait que l'élément (40) lié à l'équipage mobile comprend une structure (44) d'indexation non symétrique de révolution.

10. Appareil selon l'une des revendications 1 à 9, caractérisé par le fait que l'élément (50) lié au bâti (10) et définissant la chambre d'amortissement fait partie intégrante d'un plateau support de cadran.
